# EUROPÄISCHE PATENTANMELDUNG

(11) **EP 1 601 080 A1**
(43) Veröffentlichungstag der Anmeldung: **30.11.2005**
(21) Anmeldenummer: 04405324.7
(22) Anmeldetag: 26.05.2004
(51) Int. Cl.: H02K 1/14

(54) **Bürstenloser Elektromotor**

(71) Anmelder: SAIA-Burgess Murten AG, 3280 Murten (CH)
(72) Erfinder: Bourqui, Yvan, 1720 Corminboeuf (CH); Engel, Andreas, 3280 Murten (CH)
(74) Vertreter: Störzbach, Michael Andreas

(57) **Zusammenfassung**

Der Elektromotor ohne Bürsten, insbesondere Schrittmotor oder bürstenloser Gleichstrommotor, umfasst einen Rotor (1), mindestens eine Spule (11a, 11b) und einen Stator, der mindestens eine erste (21a, 21b) und eine zweite Statorplatte (33) aufweist. Die erste Statorplatte umfasst einen im Wesentlichen quer zur Rotationsachse (2) des Rotors verlaufenden Spulenarm (26a, 26b), auf welchem die Spule (11a, 11b) angeordnet ist. Der Elektromotor ist relativ flach im Aufbau.

## Beschreibung

Die vorliegende Erfindung bezieht sich auf einen Elektromotor ohne Bürsten gemäss Oberbegriff des Patentanspruchs 1.

Zum Antreiben des Rotors werden bei derartigen Elektromotoren anstelle von Bürsten bzw. Kommutatoren eine elektronische Schaltung verwendet, um den Motor in geeigneter Weise zu bestromen.

In der EP-A1-1 359 656 ist ein bürstenloser Elektromotor mit einem Stator beschrieben, dessen Spulendraht im Wesentlichen ringförmig um die Rotationsachse des Rotors gewickelt ist. Diese Anordnung hat den Nachteil, dass das Statorpaket in axialer Richtung, d.h. parallel zur Rotationsachse des Rotors, relativ ausgedehnt gestaltet sein muss, um eine grosse Windungszahl des Spulendrahtes zu erzielen. Die axiale Ausdehnung ist bei diesem Motor besonders ausgeprägt, da zur Erhöhung der Leistungsstärke zwei Spulen vorgesehen sind, die nebeneinander in axialer Richtung angeordnet sind.

Aus der EP-A1-1 183 770 ist ein Motor bekannt, welcher mit zwei Querbolzen verbundene Statorplatten umfasst. Der Spulendraht ist jeweils ringförmig um die Querbolzen gewickelt, wobei diese parallel zu der Rotationsachse des Rotors angeordnet sind. Auch bei dieser Anordnung bedingt eine grosse Windungszahl eine entsprechend grosse axiale Ausdehnung des Statorpakets.

Ausgehend von diesem Stand der Technik liegt eine Aufgabe der vorliegenden Erfindung darin, einen Elektromotor der eingangs erwähnten Art anzugeben, der auch bei einer grossen Windungszahl der Spule relativ flach ausgestaltet ist.

Ein Elektromotor, der diese Aufgabe löst, ist im Anspruch 1 angegeben. Die weiteren Ansprüche geben bevorzugte Ausführungen an.

Die Erfindung wird im Folgenden anhand eines bevorzugten Ausführungsbeispiels unter Bezugnahme auf Figuren erläutert.

Es zeigen
Fig. 1 eine Explosionsansicht des erfindungsgemässen Motors;
Fig. 2 die Explosionsansicht gemäss Fig. 1 aus einer anderen Perspektive;
Fig. 3 einen Spulenkörper des Motors gemäss Fig. 1 in einer perspektivischen Ansicht von hinten;
Fig. 4 den Spulenkörper gemäss Fig. 3 in einer perspektivischen Ansicht von vorne;
Fig. 5 den zusammengesetzten Motor gemäss Fig. 1 in einer perspektivischen Ansicht von hinten; und
Fig. 6 den zusammengesetzten Motor gemäss Fig. 1 in einer perspektivischen Ansicht von vorne.

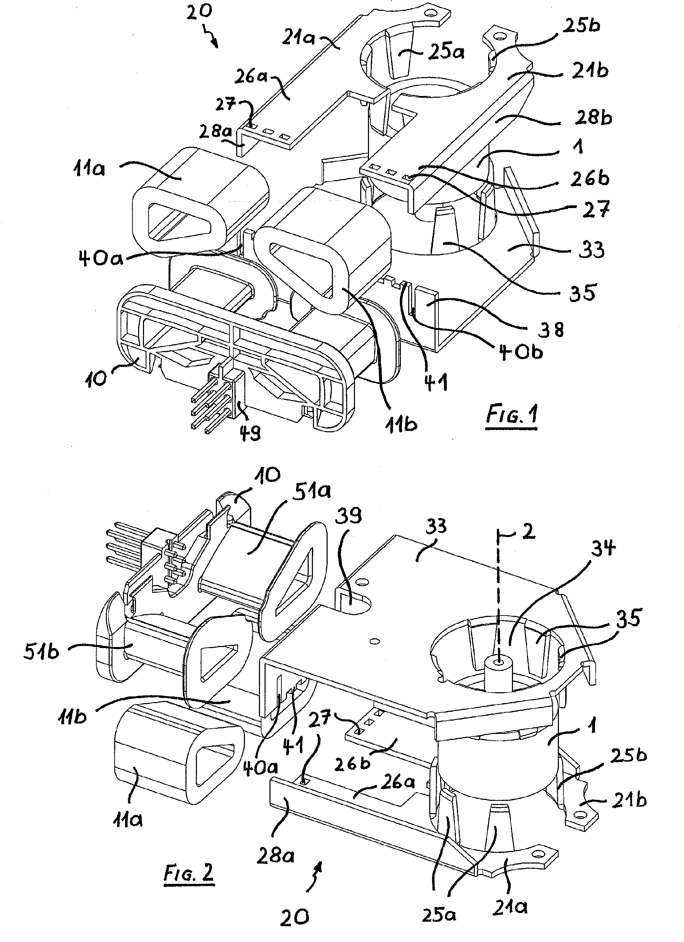

Wie die Fig. 1 und 2 zeigen, umfasst der Elektromotor einen Rotor 1, einen Spulenkörper 10 mit Spulen 11a und 11b sowie einen Stator 20 mit einer ersten, zweiten und dritten Statorplatte 21a, 21b, 33.

Der Rotor 1 ist von im Wesentlichen zylinderförmiger Gestalt. Er ist permanentmagnetisch und mit einer bestimmten Anzahl n Pole, d.h. Nord- und Südpole, versehen. Die Nord- und Südpole sind abwechselnd um die Rotationsachse 2 des Rotors 1 angeordnet, wobei jeder Pol streifenförmig parallel zur Rotationsachse 2 verläuft.

Die erste und die zweite Statorplatte 21a, 21b sind jeweils einstückig und spiegelsymmetrisch zueinander ausgebildet. Sie weisen jeweils im Bereich des Rotors 1 Zähne 25a bzw. 25b auf, welche in Richtung der dritten Statorplatte 33 abgewinkelt sind. Angrenzend an die Zähne 25a, 25b umfasst die erste bzw. zweite Statorplatte 21a, 21b einen Spulenarm 26a bzw. 26b, der im Wesentlichen quer zur Rotationsachse 2 verläuft, vorzugsweise im Wesentlichen senkrecht zur Rotationsachse 2. Das Ende des Spulenarms 26a bzw. 26b ist mit durchgehenden Ausnehmungen 27 versehen.

Der Spulenarm 26a bzw. 26b weist entlang seiner Längsseite einen abgewinkelten Teil 28a bzw. 28b auf, wodurch sich ein im Wesentlichen L-förmigen Querschnitt ergibt. Dadurch ist gewährleistet, dass der Spulenarm 26a bzw. 26b mit einer vergrösserten Fläche dem von der bestromten Spule 11a bzw. 11b erzeugten magnetischen Feld ausgesetzt ist und so dem Auftreten einer Sättigung entgegengewirkt wird.

Die dritte Statorplatte 33 ist einstückig ausgebildet und weist im Bereich des Rotors 1 eine kreisförmige Ausnehmung 34 auf, an deren Rand Zähne 35 angeordnet sind, die in Richtung der ersten bzw. zweiten Statorplatte 21a, 21b abgewinkelt sind. Das eine Ende 38 der dritten Statorplatte 33 ist ebenfalls abgewinkelt, wobei es in der Mitte eine Ausnehmung 39 umfasst und beidseitig der Mitte mit einem ersten bzw. zweiten Schlitz 40a bzw. 40b sowie mit Verbindungszähnen 47 versehen ist.

Die dritte Statorplatte 33 bildet eine stabile Grundplatte, auf welcher vorteilhafterweise weitere Komponenten montierbar sind, beispielsweise die Lagermittel für den Rotor 1 und/oder ein an den Rotor 1 gekoppeltes Getriebe mit einer Abtriebswelle.

Die Statorplatten 21a, 21b, 33 sind aus einem weichmagnetischen Material, beispielsweise weichmagnetischem Stahl (Elektroblech), hergestellt. Dazu werden sie in der gewünschten Form aus einem Blech ausgestanzt und in die Endform gebogen.

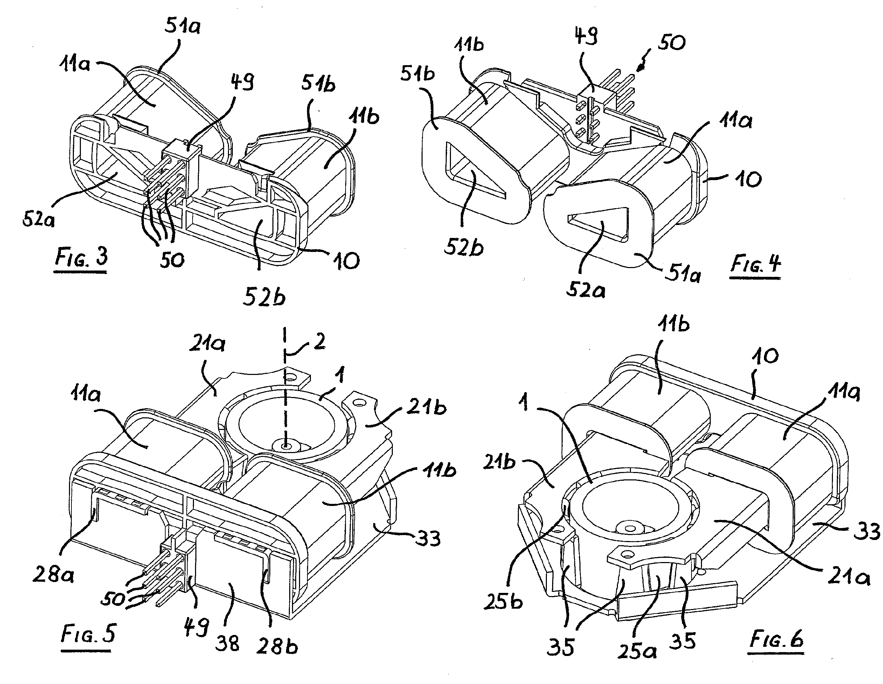

Wie auch aus den Fig. 3 und 4 ersichtlich, ist der Spulenkörper 10 einteilig ausgebildet und weist in der Mitte ein Anschlussstück 49 mit metallenen Stiften 50 auf, welche vorderseitig zur galvanischen Verbindung mit dem Spulendraht und rückseitig als Anschluss für einen Stecker dienen. Beidseitig vom Anschlussstück 49 umfasst der Spulenkörper 10 einen ersten bzw. zweiten Spulenträger 51a bzw. 51b zur Aufnahme der Spule 11a bzw. 11b. Der Spulenträger 51a bzw. 51b ist in der Mitte mit einer in Längsrichtung durchgehenden Öffnung 52a bzw. 52b versehen, welche einen im Wesentlichen dreieckigen Querschnitt hat.

Zur Herstellung des Spulenkörpers 10 wird Kunststoff beispielsweise durch Spritzgiessen in die gewünschte Form gebracht, wobei das Anschlussstück mit Löchern versehen ist, deren Durchmesser jeweils etwas kleiner ist als der Durchmesser der Stifte 50. Diese werden dann in die entsprechenden Löcher hineingetrieben.

Die Komponenten des Elektromotors werden auf folgende Weise zusammengebaut:

Der Spulenkörper 10 wird mit den Spulen 11a, 11b versehen, indem der Spulendraht um den jeweiligen Spulenträger 51a bzw. 51b gewickelt wird. Die Enden des Spulendrahtes werden dabei an den Enden der Stifte 50 befestigt. Bei der Herstellung eines unipolaren Elektromotors werden die beiden Spulen 11a und 11b durch Wickeln von je zwei Spulenhälften gebildet, indem beispielsweise die beiden Spulenträger 51a bzw. 51b bifilar bewickelt werden, und vorzugsweise an der Mittelanzapfung kurzgeschlossen, indem z.B. zwei der Stifte 50 elektrisch verbunden werden. Zum Anbringen des mit den Wicklungen versehenen Spulenkörpers 10 wird der Spulenarm 26a bzw. 26b durch die entsprechende Öffnung 52a bzw. 52b des Spulenkörpers 10 geführt. Das Anschlussstück 49 wird in die Ausnehmung 39 der dritten Statorplatte 33 geschoben sowie der abgewinkelte Teil 28a, 28b der ersten bzw. zweiten Statorplatte 21a, 21b in den entsprechenden Schlitz 40a, 40b geführt, bis die Verbindungszähne 41 fest in die Ausnehmungen 39 greifen. Schliesslich werden Rotor 1, Lagermittel und Getriebe angebracht.

Fig. 5 und 6 zeigen den zusammengesetzten Motor. Die Zähne 25a, 25b, 35 durchdringen sich gegenseitig und bilden einen Käfig, in welchem der Rotor 1 untergebracht ist. Die Spule 11a bzw. 11b ist ausserhalb dieses Käfigs angeordnet. Die beiden Statorplatten 21a, 21b bilden zusammen einen im Wesentlichen U-förmigen Träger, wobei der jeweilige Schenkel dieses U als Spulenarm 26a bzw. 26b dient. Im Ausführungsbeipiel gemäss Fig. 5 und 6 sind die beiden Spulenarme 26a, 26b im Wesentlichen parallel nebeneinander und - von oben wie von vorne gesehen - etwa auf gleicher Höhe angeordnet. Dadurch ist ein besonders flacher und kompakter Aufbau gegeben.

Beim Bestromen der Spule 11a, 11b werden die entsprechende Statorplatte 21a, 21b und somit die Zähne 25a, 25b magnetisiert, wobei über die dritte Statorplatte 33 die magnetischen Flusslinien geschlossen werden. Der Rotor 1 hat im hier dargestellten Ausführungsbeipiel n = 14 magnetische Pole, während die Statorplatten 21a, 21b, 33 insgesamt n-2 = 12 Zähne aufweisen, nämlich die Statorplatte 21a und 21b jeweils drei Zähne und die Statorplatte 33 sechs Zähne. Da der von der Spule 11a erzeugte magnetische Fluss um 90 Grad elektrisch verschoben ist gegenüber dem von der Spule 11b erzeugten magnetischen Fluss, sind die Polzähne 25a gegenüber den Polzähnen 25b ebenfalls um 90 Grad elektrisch versetzt angeordnet, sodass durch diese unregelmässige Anordnung der Platz für ein Polpaar fehlt.

Je nach dem gewünschten minimalen Schrittwinkel, um welchen der Rotor 1 rotierbar sein soll, ist die Anzahl n der magnetischen Pole bzw. die Anzahl n-2 der Zähne 25a, 25b, 35 entsprechend gewählt.

Zum Antreiben des Rotors 1 benötigt der erfindungsgemässe Motor keine Bürsten, sondern mittels einer geeigneten elektronischen Schaltung (nicht dargestellt) werden die Spulen 11a, 11b in geeigneter Weise bestromt, sodass sich ein wechselndes Magnetfeld ergibt.

Der erfindungsgemässe Elektromotor kann u.a. als Schrittmotor oder als bürstenloser Gleichstrommotor betrieben werden. Im letzteren Fall umfasst der Elektromotor Mittel zum Erfassen der Rotorlage, beispielsweise in Form von einem oder mehreren Sensoren, insbesondere Hall-Sensoren.

Aus der bisher dargestellten Konzeption des Elektromotors ergeben sich u.a. folgende Vorteile:
- Der Motor ist einfach im Aufbau und kostengünstig herstellbar. Insbesondere benötigt der Aufbau im Vergleich zu gängigen Motoren eine reduzierte Anzahl Komponenten.
- Für die Spulenwicklungen steht ein grosses Volumen zur Verfügung. Dieses Volumen ist keinen geometrischen Einschränkungen unterworfen. Insbesondere ist die Länge des Spulenarms 26a, 26b je nach Anwendung wählbar. Es ist möglich die Wicklungsdrähte möglichst nahe an den Statorplatten 21a, 21b anzuordnen, sodass auch mit einer relativ kurzen Gesamtlänge des Wicklungsdrahtes eine Spule 11a, 11b mit einer grossen Induktivität erzeugbar ist.
- Eine grosse Induktivität wirkt sich günstig auf das Vibrationsverhalten des Motors aus. Es hat sich gezeigt, dass der erfindungsgemässe Elektromotor im Vergleich zu üblichen Elektromotoren weniger stark vibriert und einen geräuschärmeren Betrieb ermöglicht. Er ist daher insbesondere geeignet als Antrieb in Aktuatoren, wie sie in Kraftfahrzeugen zur Steuerung von beweglichen Komponenten verwendet werden.
- Der Spulenarm verläuft 26a, 26b im Wesentlichen quer zur Rotationsachse des Rotors, sodass auch bei einer grossen Windungszahl der Spulendrähte ein relativ flacher Aufbau resultiert. Im Gegensatz zu Motoren mit zwei kreisförmigen, um die Rotationsachse angeordnete Spulen, wie sie z.B. bei sogenannten Tin-can-Schrittmotoren verwendet werden, ist beim erfindungsgemässen Motor das aus den Statorplatten 21a, 21b, 33 gebildete Statorpaket nur eine Spulenbreite und nicht zwei Spulenbreiten hoch. Dadurch ist auch gewährleistet, dass bei einer alternierenden Bestromung der beiden Spulen 11a, 11b keine Vibrationen in axialer Richtung erzeugt werden, dies im Gegensatz bei zwei um die Rotationsachse angeordnete Spulen. Werden die beiden Spulen 11a und 11b alternierend bestromt, so kann durch eine genaue radiale Führung des Rotors 1 die Amplitude der Vibrationen wirksam begrenzt werden.

Aus der vorangehenden Beschreibungen sind dem Fachmann zahlreiche Abwandlungen zugänglich, ohne den Schutzbereich der Erfindung zu verlassen, der durch die Ansprüche definiert ist.

Die parallele Anordnung der Spulenarme 26a, 26b braucht nicht so gewählt zu sein wie in den Fig. 5 und 6 gezeigt, sondern kann je nach Anwendung angepasst sein. Es ist z.B. denkbar, die beiden Spulenarme nicht nebeneinander, sondern im Wesentlichen hintereinander anzuordnen, sodass ein Motor mit einem flachen und länglichen Aufbau resultiert.

Im Weiteren können Anzahl der Statorplatten, Zähne, Spulen, Spulenarme, etc. in geeigneter Weise gewählt werden. So ist es z.B. denkbar mehr als drei Statorplatten zu verwenden. Anstelle von zwei Spulen reicht unter Umständen auch eine Spule aus (einphasiger Motor) oder es sind mehr als zwei Spulen vorgesehen. Je nach Wicklungsart der Spulen ist ein unipolarer oder bipolarer Motor herstellbar.

## Patentansprüche

1. Elektromotor ohne Bürsten, insbesondere Schrittmotor oder bürstenloser Gleichstrommotor, mit einem Rotor, mindestens einer Spule und einem Stator, der mindestens eine erste und eine zweite Statorplatte umfasst, **dadurch gekennzeichnet, dass** die erste Statorplatte (21a, 21b) einen im Wesentlichen quer zur Rotationsachse (2) des Rotors (1) verlaufenden Spulenarm (26a, 26b) aufweist, auf welchem die Spule (11a, 11b) angeordnet ist.

2. Elektromotor nach Anspruch 1, **dadurch gekennzeichnet, dass** der Rotor (1) permanentmagnetisch ist und die Statorplatten (21a, 21b, 33) Zähne (25a, 25b, 35) umfassen, die Teil eines Käfigs sind, in welchem der Rotor angeordnet ist.

3. Elektromotor nach einem der Ansprüche 1 bis 2, **dadurch gekennzeichnet, dass** der Spulenarm (26a, 26b) eine abgewinkelte Seite (28a, 28b) umfasst zur Erhöhung der Fläche, auf welche das von der Spule (11a, 11b) erzeugte Magnetfeld wirkt.

4. Elektromotor nach einem der Ansprüche 1 bis 3, **dadurch gekennzeichnet, dass** er eine zweite Spule (11b) beinhaltet und die zweite Statorplatte (21b) einen im Wesentlichen quer zur Rotationsachse des Rotors (1) verlaufenden zweiten Spulenarm (26b) aufweist, auf welchem die zweite Spule angeordnet ist.

5. Elektromotor nach einem der Ansprüche 1 bis 4, **dadurch gekennzeichnet, dass** er eine dritte Statorplatte (33) umfasst, die gleichzeitig als Träger für Lagermittel des Rotors und/oder für ein mit dem Rotor gekoppeltes Getriebe dient.

6. Elektromotor nach einem der Ansprüche 1 bis 5, **dadurch gekennzeichnet, dass** er einen Spulenkörper (10) umfasst mit Stiften (50), welche sowohl zur galvanischen Verbindung mit den Spulendrähten als auch als Anschluss für einen Stecker dienen.

7. Elektromotor nach einem der Ansprüche 1 bis 6, **dadurch gekennzeichnet, dass** der Spulenkörper (10) einteilig ist und Spulenträger (51a, 51b) umfasst zur Aufnahme von mindestens zwei Spulen (11a, 11b).
